(19) **Europäisches Patentamt / European Patent Office / Office européen des brevets**

(11) **EP 4 546 335 A1**

(12) **EUROPEAN PATENT APPLICATION**
published in accordance with Art. 153(4) EPC

(43) Date of publication:
30.04.2025 Bulletin 2025/18

(21) Application number: 23850376.7

(22) Date of filing: 31.07.2023

(51) International Patent Classification (IPC):
*G10L 15/22* (2006.01)      *G10L 17/04* (2013.01)
*G10L 17/06* (2013.01)      *G10L 15/30* (2013.01)
*G10L 15/26* (2006.01)      *G06N 3/02* (2006.01)

(52) Cooperative Patent Classification (CPC):
**G10L 17/06; G06N 3/02; G10L 15/02; G10L 15/16;
G10L 15/22; G10L 15/26; G10L 15/30; G10L 17/02;
G10L 17/04; G10L 17/18**

(86) International application number:
**PCT/KR2023/011151**

(87) International publication number:
**WO 2024/029875 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 05.08.2022  KR 20220098112
31.08.2022  KR 20220109644

(71) Applicant: **Samsung Electronics Co., Ltd.
Suwon-si, Gyeonggi-do 16677 (KR)**

(72) Inventors:
• **LEE, Taewoo**
**Suwon-si Gyeonggi-do 16677 (KR)**

• **KWON, Minseok**
**Suwon-si Gyeonggi-do 16677 (KR)**
• **KIM, Kyungtae**
**Suwon-si Gyeonggi-do 16677 (KR)**
• **SONG, Gajin**
**Suwon-si Gyeonggi-do 16677 (KR)**
• **SHIN, Hoseon**
**Suwon-si Gyeonggi-do 16677 (KR)**
• **LEE, Jungin**
**Suwon-si Gyeonggi-do 16677 (KR)**
• **JUNG, Seokyeong**
**Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE, INTELLIGENT SERVER, AND SPEAKER ADAPTIVE SPEECH RECOGNITION METHOD**

(57)    An electronic device according to an embodiment may comprise: a memory that stores at least one instruction: and at least one processor that is operatively connected to the memory and is for executing the at least one instruction. The at least one processor may perform speaker verification of a speech input to determine whether or not the speech input matches speech of a registered speaker. The at least one processor may perform first speech recognition of the speech input on the basis of a first ASR model if the speech input does not match the speech of the registered speaker. The at least one processor may perform second speech recognition of the speech input on the basis of an SSN and a second ASR model if the speech input matches the speech of the registered speaker. Another embodiment may be possible.

**FIG. 5**

**Description**

BACKGROUND

Technical Field

The disclosure relates to an electronic device, an intelligent server, and a speaker-adaptive speech recognition method.

Background Art

Electronic devices equipped with a voice assistant function to provide a service based on a user utterance are being distributed. An electronic device may recognize an utterance of a user through an artificial intelligence (AI) server and figure out the meaning and intent of the utterance. The AI server may infer the intent of the user by interpreting the utterance of the user, and may perform tasks according to the inferred intent. The AI server may perform a task according to the intent of the user expressed through natural language interactions between the user and the AI server.

Disclosure of the Invention

Technical Solutions

According to an aspect of the disclosure, an electronic device includes: a memory storing at least one instruction; and at least one processor operatively connected to the memory. The at least one processor is configured to execute the at least one instruction to: perform speaker verification on a voice input to determine whether the voice input matches a voice of an enrolled speaker, based on determining that the voice input does not match the voice of the enrolled speaker, perform first speech recognition on the voice input based on a first automatic speech recognition (ASR) model, and based on determining that the voice input matches the voice of the enrolled speaker, perform second speech recognition on the voice input based on a sequence summarizing neural network (SSN) and a second ASR model.

According to an aspect of the disclosure, an intelligent server includes: a memory storing at least one instruction; and at least one processor operatively connected to the memory. The at least one processor is configured to execute the at least one instruction to: perform speaker verification on a voice input to determine whether the voice input matches a voice of an enrolled speaker, based on determining that the voice input does not match the voice of the enrolled speaker, perform first speech recognition on the voice input based on a first automatic speech recognition (ASR) model, and based on determining that the voice input matches the voice of the enrolled speaker, perform second speech recognition on the voice input based on a sequence summarizing neural network (SSN) and a second ASR model.

According to an aspect of the disclosure, an operating method of an intelligent server includes: performing speaker verification on a voice input to determine whether the voice input matches a voice of an enrolled speaker; based on determining that the voice input does not match the voice of the enrolled speaker, performing first speech recognition on the voice input based on a first automatic speech recognition (ASR) model; and based on determining that the voice input matches the voice of the enrolled speaker, performing second speech recognition on the voice input based on a sequence summarizing neural network (SSN) and a second ASR model.

BRIEF DESCRIPTION OF THE DRAWINGS

FIG. 1 is a block diagram illustrating an electronic device in a network environment according to an embodiment;
FIG. 2 is a block diagram illustrating an integrated intelligence system according to an embodiment;
FIG. 3 is a diagram illustrating relationship information between concepts and actions stored in a database according to an embodiment;
FIG. 4 is a diagram illustrating a screen of an electronic device processing a received voice input through an intelligent app according to an embodiment;
FIG. 5 is a diagram illustrating speech recognition by an intelligent server according to an embodiment;
FIG. 6A is a schematic block diagram of an electronic device according to an embodiment;
FIG. 6B is a schematic block diagram of a sequence summarizing neural network (SSN) according to an embodiment;
FIG. 6C is a schematic block diagram of an adapter layer according to an embodiment;
FIG. 7 is a diagram illustrating a method of training an SSN and an adapter layer according to an embodiment;
FIG. 8 is a diagram illustrating a result of speech recognition by an electronic device according to an embodiment; and
FIG. 9 is a flowchart illustrating an operating method of an intelligent server according to an embodiment.

DETAILED DESCRIPTION

Hereinafter, embodiments of the disclosure will be described in detail with reference to the accompanying drawings. When describing the embodiments with reference to the accompanying drawings, like reference numerals refer to like elements and a repeated description related thereto may be omitted.

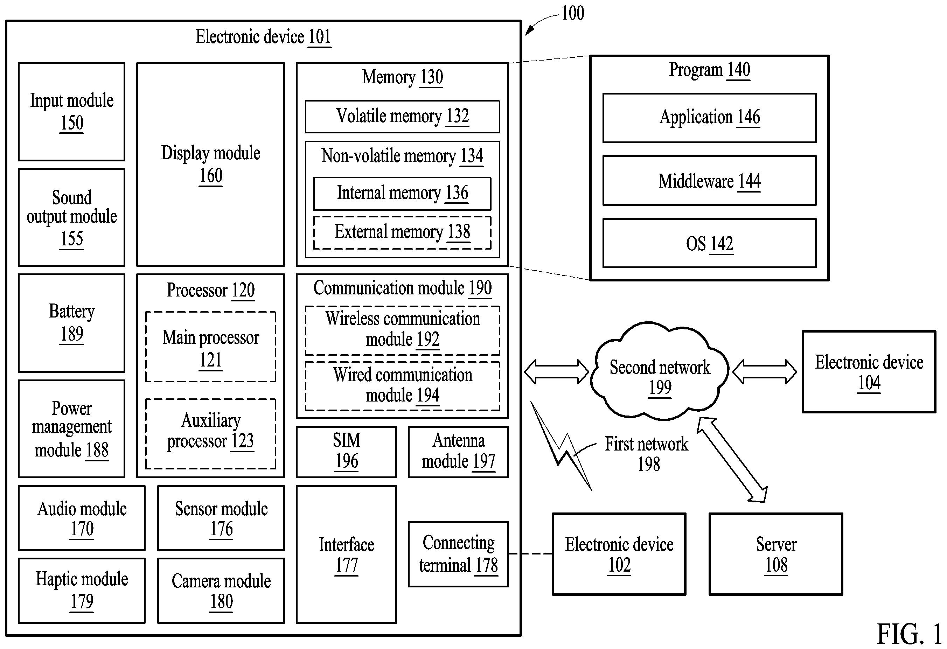

FIG. 1 is a block diagram illustrating an electronic device 101 in a network environment 100 according to an embodiment. Referring to FIG. 1, the electronic device 101 in the network environment 100 may communicate with an external electronic device 102 via a first network 198 (e.g., a short-range wireless communication network), or communicate with at least one of an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include at least one processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In an embodiment, at least one of the components (e.g., the sensor module 176, the camera module 180, or the antenna module 197) may be integrated as a single component (e.g., the display module 160).

The at least one processor 120 may be a single processor or a plurality of processors each executing one or more operations. The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), an auxiliary processor 123 (e.g., a graphics processing unit (GPU), a neural processing unit (NPU), an image signal processor (ISP), a sensor hub processor, and/or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a portion of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence model processing. An artificial intelligence model may be generated by machine learning. Such learning may be performed by, for example, the electronic device 101 in which an artificial intelligence model is executed, or performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., the external electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wired) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the external electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices (e.g., external electronic device 102 and external electronic device 104) may be a device of the same type as or a different type from the electronic device 101. According to an embodiment, all or some of operations to be executed by the electronic device 101 may be executed at one or more of the external electronic devices (e.g., external electronic device 102 and external electronic device 104), and the server 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least portion of the function or the service requested, or an additional function or an additional service related to the request, and may transfer an outcome of the performing to the electronic device 101. The electronic device 101 may provide the outcome, with or without further processing of the outcome, as at least portion of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

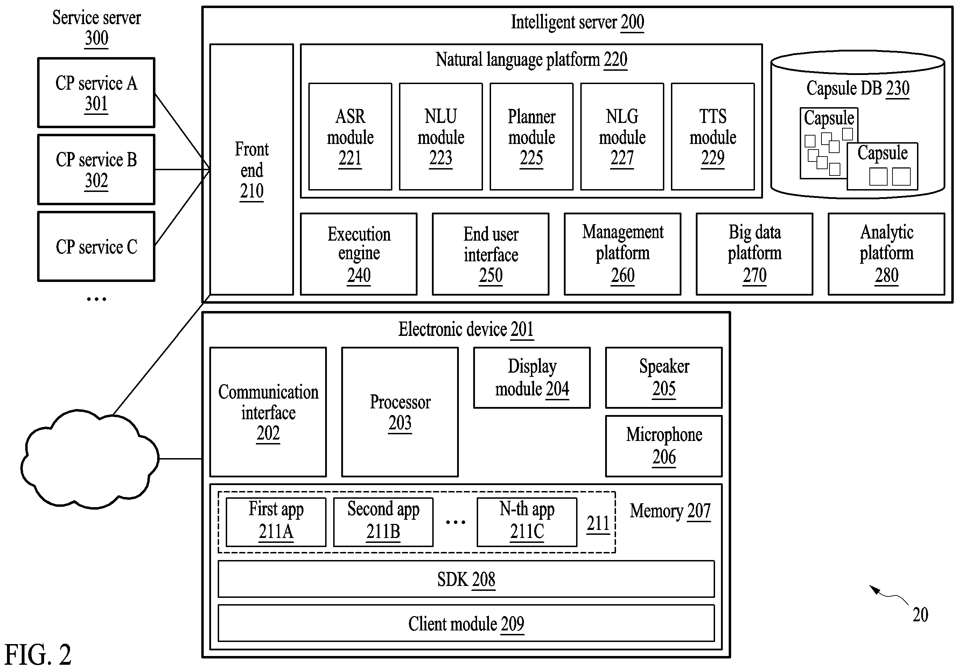

Referring to FIG. 2, an integrated intelligence system 20 according to an embodiment may include an electronic device 201 (e.g., the electronic device 101), an intelligent server 200 (e.g., the server 108), and a service server 300 (e.g., the server 108 of FIG. 1).

The electronic device 201 may be a terminal device (or an electronic device) connectable to the Internet, and may be, for example, a mobile phone, a smartphone, a personal digital assistant (PDA), a notebook computer, a TV, a white home appliance, a wearable device, a head-mounted display (HMD), or a smart speaker.

According to the shown embodiment, the electronic device 201 may include a communication interface 202 (e.g., the interface 177), a microphone 206 (e.g., the input module 150), a speaker 205 (e.g., the sound output module 155), a display module 204 (e.g., the display module 160), a memory 207 (e.g., the memory 130), or a processor 203 (e.g., the processor 120). The components listed above may be operationally or electrically connected to each other.

The communication interface 202 may be connected to an external device and configured to transmit and receive data to and from the external device. The microphone 206 may receive a sound (e.g., a user utterance) and convert the sound into an electrical signal. The speaker 205 may output the electrical signal as a sound (e.g., a speech).

The display module 204 may be configured to display an image or video. The display module 204 may also display a graphical user interface (GUI) of an app (or an application program) being executed. The display module 204 may receive a touch input through a touch sensor. For example, the display module 204 may receive a text input through a touch sensor in an on-screen keyboard area displayed in the display module 204.

The memory 207 may store a client module 209, a software development kit (SDK) 208, and a plurality of apps 211. The client module 209 and the SDK 208 may configure a framework (or a solution program) for performing general-purpose functions. In addition, the client module 209 or the SDK 208 may configure a framework for processing a user input (e.g., a voice input, a text input, or a touch input).

The plurality of apps 211 stored in the memory 207 may be programs for performing designated functions. The plurality of apps 211 may include, for example, a first app 211A, a second app 211B, up to and including an N-th app 211C. Each of the plurality of apps 211 may include a plurality of actions for performing a designated function. For example, the apps may include an alarm app, a messaging app, and/or a scheduling app. The plurality of apps 211 may be executed by the processor 203 to sequentially execute at least a portion of the plurality of actions.

The processor 203 may control the overall operation of the electronic device 201. For example, the processor 203 may be electrically connected to the communication interface 202, the microphone 206, the speaker 205, and the display module 204 to perform a designated operation.

The processor 203 may also perform the designated function by executing the program stored in the memory 207. For example, the processor 203 may execute at least one of the client module 209 or the SDK 208 to perform the following operation for processing a user input. The processor 203 may control the operation of the plurality of apps 211 through, for example, the SDK 208. The following operation which is the operation of the client module 209 or the SDK 208 may be performed by the processor 203.

The client module 209 may receive a user input. For example, the client module 209 may receive a voice signal corresponding to a user utterance sensed through the microphone 206. As another example, the client module 209 may receive a touch input sensed through the display module 204. As still another example, the client module 209 may receive a text input sensed through a keyboard or an on-screen keyboard. In addition, the client module 209 may receive various types of user inputs sensed through an input module included in the electronic device 201 or an input module connected to the electronic device 201. The client module 209 may transmit the received user input to the intelligent server 200. The client module 209 may transmit state information of the electronic device 201 together with the received user input to the intelligent server 200. The state information may be, for example, execution state information of an app.

The client module 209 may receive a result corresponding to the received user input. For example, when the intelligent server 200 is capable of calculating a result corresponding to the received user input, the client module 209 may receive the result corresponding to the received user input. The client module 209 may display the received result on the display module 204. Further, the client module 209 may output the received result in an audio form through the speaker 205.

The client module 209 may receive a plan corresponding to the received user input. The client module 209 may display results of executing a plurality of actions of an app according to the plan on the display module 204. For example, the client module 209 may sequentially display the results of executing the plurality of actions on the display module 204 and output the results in an audio form through the speaker 205. As another example, the electronic device 201 may display only a portion of the results of executing the plurality of actions (e.g., a result of the last action) on the display module 204 and output the portion of the results in an audio form through the speaker 205.

According to an embodiment, the client module 209 may receive a request for obtaining information necessary for calculating a result corresponding to the user input from the intelligent server 200. According to an embodiment, the client module 209 may transmit the necessary information to the intelligent server 200 in response to the request.

The client module 209 may transmit information on the results of executing the plurality of actions according to the plan to the intelligent server 200. The intelligent server 200 may confirm that the received user input has been correctly processed using the information on the results.

The client module 209 may include a speech recognition module. According to an embodiment, the client module 209 may recognize a voice input for performing a limited function through the speech recognition module. For example, the client module 209 may execute an intelligent app for processing a voice input to perform an organic operation through a designated input (e.g., Wake up!).

The intelligent server 200 may receive information related to a user voice input from the electronic device 201 through a communication network. According to an embodiment, the intelligent server 200 may change data related to the received voice input into text data. According to an embodiment, the intelligent server 200 may generate a plan for performing a task corresponding to the user voice input based on the text data.

According to an embodiment, the plan may be generated by an artificial intelligence (AI) system. The artificial intelligence system may be a rule-based system or a neural network-based system (e.g., a feedforward neural network (FNN) or a recurrent neural network (RNN)). Alternatively, the artificial intelligence system may be a combination thereof or other artificial intelligence systems. According to an embodiment, the plan may be selected from a set of predefined plans or may be generated in real time in response to a user request. For example, the AI system may select at least one plan from among the predefined plans.

The intelligent server 200 may transmit a result according to the generated plan to the electronic device 201 or transmit the generated plan to the electronic device 201. According to an embodiment, the electronic device 201 may display the result according to the plan on the display module 204. According to an embodiment, the electronic device 201 may display a result of executing an action according to the plan on the display module 204.

The intelligent server 200 may include a front end 210, a natural language platform 220, a capsule database (DB) 230, an execution engine 240, an end user interface 250, a management platform 260, a big data platform 270, or an analytic platform 280.

The front end 210 may receive the received user input from the electronic device 201. The front end 210 may transmit a response corresponding to the user input.

According to an example embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 may convert data related to the voice input received from the electronic device 201 into text data. The NLU module 223 may discern an intent of a user using the text data of the voice input. For example, the NLU module 223 may discern the intent of the user by performing syntactic analysis or semantic analysis on a user input in the form of text data. The NLU module 223 may discern the meaning of a word extracted from the user input using a linguistic feature (e.g., a grammatical element) of a morpheme or phrase, and determine the intent of the user by matching the discerned meaning of the word to an intent. The NLU module 223 may obtain intent information corresponding to the user utterance. The intent information may be information indicating an intention of the user determined through an analysis of the text data. The intent information may include information indicating an action or function that the user intends to execute using a device.

The planner module 225 may generate a plan using a parameter and the intent determined by the NLU module 223. According to an embodiment, the planner module 225 may determine a plurality of domains required to perform a task based on the determined intent. The planner module 225 may determine a plurality of actions included in each of the plurality of domains determined based on the intent. According to an embodiment, the planner module 225 may determine a parameter required to execute the determined plurality of actions or a result value output by the execution of the plurality of actions. The parameter and the result value may be defined as a concept of a designated form (or class). Accordingly, the plan may include a plurality of actions and a plurality of concepts determined by the intent of the user. The planner module 225 may determine a relationship between the plurality of actions and the plurality of concepts stepwise (or hierarchically). For example, the planner module 225 may determine an execution order of the plurality of actions determined based on the intent of the user, based on the plurality of concepts. In other words, the planner module 225 may determine the execution order of the plurality of actions based on the parameter required for the execution of the plurality of actions and results output by the execution of the plurality of actions. Accordingly, the planner module 225 may generate a plan including connection information (e.g., ontology) on connections between the plurality of actions and the plurality of concepts. The planner module 225 may generate the plan using information stored in the capsule DB 230 that stores a set of relationships between concepts and actions.

The NLG module 227 may change designated information into a text form. The information changed to the text form may be in the form of a natural language utterance. The TTS module 229 may change information in a text form into information in a speech form.

According to an embodiment, some or all of the functions of the natural language platform 220 may be implemented in the electronic device 201 as well.

The capsule DB 230 may store information on the relationship between the plurality of concepts and actions corresponding to the plurality of domains. A capsule according to an embodiment may include a plurality of action objects (or action information) and concept objects (or concept information) included in the plan. According to an embodiment, the capsule DB 230 may store a plurality of capsules in the form of a concept action network (CAN). According to an embodiment, the plurality of capsules may be stored in a function registry included in the capsule DB 230.

The capsule DB 230 may include a strategy registry that stores strategy information necessary for determining a plan corresponding to a voice input. The strategy information may include reference information for determining one plan when there are a plurality of plans corresponding to the user input. According to an embodiment, the capsule DB 230 may include a follow-up registry that stores information on follow-up actions for suggesting a follow-up action to the user in a designated situation. The follow-up action may include, for example, a follow-up utterance. According to an embodiment, the capsule DB 230 may include a layout registry that stores layout information that is information output through the electronic device 201. According to an embodiment, the capsule DB 230 may include a vocabulary registry that stores vocabulary information included in capsule information. According to an embodiment, the capsule DB 230 may include a dialog registry that stores information on a dialog (or an interaction) with the user. The capsule DB 230 may update the stored objects through a developer tool. The developer tool may include, for example, a function editor for updating an action object or a concept object. The developer tool may include a vocabulary editor for updating the vocabulary. The developer tool may include a strategy editor for generating and registering a strategy for determining a plan. The developer tool may include a dialog editor for generating a dialog with the user. The developer tool may include a follow-up editor for activating a follow-up objective and editing a follow-up utterance that provides a hint. The follow-up objective may be determined based on a current set objective, a preference of the user, or an environmental condition. In an embodiment, the capsule DB 230 may be implemented in the electronic device 201 as well.

The execution engine 240 may calculate a result using the generated plan. The end user interface 250 may transmit the calculated result to the electronic device 201. Accordingly, the electronic device 201 may receive the result and provide the received result to the user. The management platform 260 may manage information used by the intelligent server 200. The big data platform 270 may collect data of the user. The analytic platform 280 may manage a quality of service (QoS) of the intelligent server 200. For example, the analytic platform 280 may manage the components and processing rate (or efficiency) of the intelligent server 200.

The service server 300 may provide a designated service (e.g., food order or hotel reservation) to the electronic device 201. According to an embodiment, the service server 300 may be a server operated by a third party. The service server 300 may provide information to be used for generating a plan corresponding to the received user input to the intelligent server 200. The provided information may be stored in the capsule DB 230. In addition, the service server 300 may provide result information according to the plan to the intelligent server 200.

In the integrated intelligence system 20 described above, the electronic device 201 may provide various intelligent services to the user in response to a user input. The user input may include, for example, an input through a physical button, a touch input, or a voice input.

In an embodiment, the electronic device 201 may provide a speech recognition service through an intelligent app (or a speech recognition app) stored therein. In this case, for example, the electronic device 201 may recognize a user utterance or a voice input received through the microphone, and provide a service corresponding to the recognized voice input to the user.

In an embodiment, the electronic device 201 may perform a designated action alone or together with the intelligent server and/or a service server, based on the received voice input. For example, the electronic device 201 may execute an app corresponding to the received voice input and perform a designated action through the executed app.

In an embodiment, when the electronic device 201 provides a service together with the intelligent server 200 and/or the service server 300, the electronic device 201 may detect a user utterance using the microphone 206 and generate a signal (or voice data) corresponding to the detected user utterance. The electronic device 201 may transmit the voice data to the intelligent server 200 using the communication interface 202.

The intelligent server 200 may generate, as a response to the voice input received from the electronic device 201, a plan for performing a task corresponding to the voice input or a result of performing an action according to the plan. The plan may include, for example, a plurality of actions for performing a task corresponding to a voice input of a user, and a plurality of concepts related to the plurality of actions. The concepts may define parameters input to the execution of the plurality of actions or result values output by the execution of the plurality of actions. The plan may include connection information between the plurality of actions and the plurality of concepts.

The electronic device 201 may receive the response using the communication interface 202. The electronic device 201 may output a voice signal internally generated by the electronic device 201 to the outside using the speaker 205, or output an image internally generated by the electronic device 201 to the outside using the display module 204.

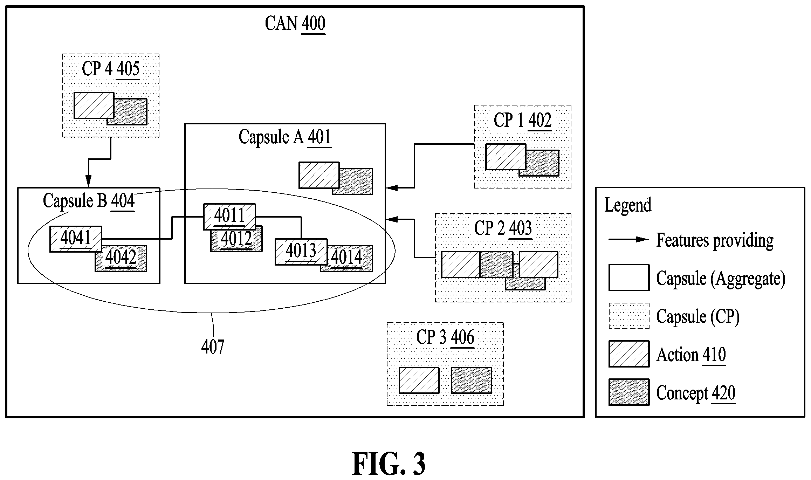

FIG. 3 is a diagram illustrating relationship information between concepts and actions is stored in a database according to various example embodiments.

A capsule DB (e.g., the capsule DB 230) of the intelligent server (e.g., the intelligent server 200) may store capsules in the form of a CAN 400. The capsule DB may store an action for processing a task corresponding to a voice input of a user and a parameter required for the action in the form of a CAN.

The capsule DB may store a plurality of capsules (a capsule A 401 and a capsule B 404) respectively corresponding to a plurality of domains (e.g., applications). According to an embodiment, one capsule (e.g., the capsule A 401) may correspond to one domain (e.g., a location (geo) or an application). Further, the one capsule may correspond to at least one service provider (e.g., CP-1 402 or CP-2 403) for performing a function for a domain related to the capsule. According to an embodiment, one capsule may include at least one action 410 for performing a designated function and at least one concept 420.

A natural language platform (e.g., the natural language platform 220) may generate a plan for performing a task corresponding to the received voice input using the capsules stored in the capsule DB. For example, a planner module (e.g., the planner module 225) of the natural language platform may generate the plan using the capsules stored in the capsule DB. For example, a plan 407 may be generated using actions 4011 and 4013 and concepts 4012 and 4014 of the capsule A 401 and an action 4041 and a concept 4042 of the capsule B 404.

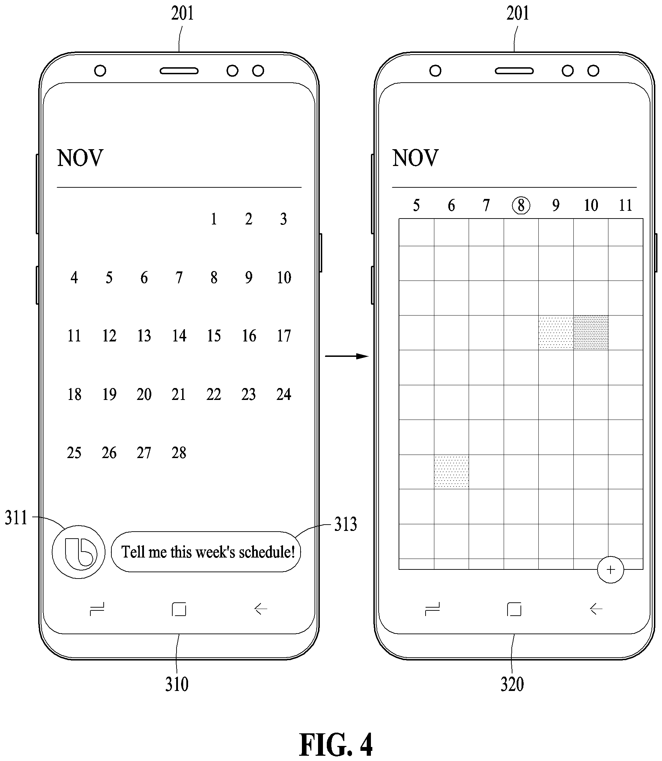

FIG. 4 is a diagram illustrating a screen of an electronic device processing a received voice input through an intelligent app according to various example embodiments.

An electronic device 201 may execute an intelligent app to process a user input through an intelligent server (e.g., the intelligent server 200).

According to an embodiment, on a screen 310, when a designated voice input (e.g., Wake up!) is recognized or an input through a hardware key (e.g., a dedicated hardware key) is received, the electronic device 201 may execute an intelligent app for processing the voice input. The electronic device 201 may execute the intelligent app, for example, in a state in which a scheduling app is executed. According to an embodiment, the electronic device 201 may display an object (e.g., an icon) 311 corresponding to the intelligent app on the display module 204 (e.g., the display module 160 or the display module 204). According to an embodiment, the electronic device 201 may receive a voice input by a user utterance. For example, the electronic device 201 may receive a voice input of "Tell me this week's schedule!". According to an embodiment, the electronic device 201 may display a user interface (UI) 313 (e.g., an input window) of the intelligent app in which text data of the received voice input is displayed on the display module 204.

According to an embodiment, on a screen 320, the electronic device 201 may display a result corresponding to the received voice input on the display module 204. For example, the electronic device 201 may receive a plan corresponding to the received user input, and display "this week's schedule" on the display module 204 according to the plan.

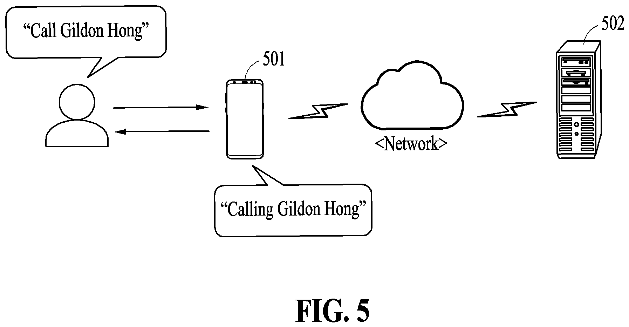

FIG. 5 is a diagram illustrating speech recognition by an intelligent server according to an embodiment.

Referring to FIG. 5, in an embodiment, an electronic device 501 may include at least a portion of the components of the electronic device 101 described with reference to FIG. 1 and the electronic device 201 described with reference to FIG. 2. An intelligent server 502 may include at least a portion of the components of the intelligent server 200 described with reference to FIG. 2. With respect to the electronic device 501 and the intelligent server 502, repeated descriptions provided with reference to FIGS. 1-4 are omitted.

The electronic device 501 (e.g., the electronic device 101 or the electronic device 201) may be connected to the intelligent server 502 (e.g., the intelligent server 200) via a LAN, a WAN, a value-added network (VAN), a mobile radio communication network, a satellite communication network, or any combination thereof. The electronic device 501 and the intelligent server 502 may communicate with each other through a wired communication method or a wireless communication method (e.g., a wireless LAN (Wi-Fi), Bluetooth, Bluetooth low energy, ZigBee, Wi-Fi Direct (WFD), ultra-wideband (UWB), infrared data association (IrDA), and near-field communication (NFC)).

In an embodiment, the electronic device 501 may be implemented as at least one of a smartphone, a tablet personal computer (PC), a mobile phone, a speaker (e.g., an artificial intelligence (AI) speaker), a video phone, an e-book reader, a desktop PC, a laptop PC, a netbook computer, a workstation, a server, a personal digital assistant (PDA), a portable multimedia player (PMP), an MP3 player, a mobile medical device, a camera, or a wearable device.

In an embodiment, the electronic device 501 may obtain a voice signal corresponding to an utterance of a user and transmit the voice signal to the intelligent server 502. The intelligent server 502 may obtain text data corresponding to the utterance of the user based on the voice signal. The text data may be obtained by converting a voice part into computer-readable text by performing ASR on the voice signal. The intelligent server 502 may analyze the utterance of the user using the text data. The intelligent server 502 may provide a response (e.g., a question or an answer) to be provided to the user to a device (e.g., the electronic device 501) using an analysis result (e.g., intent information, an entity, and/or a capsule). The intelligent server 502 may be implemented as software. A portion or entirety of the intelligent server 502 may be implemented in the electronic device 501 and/or the intelligent server 502 (e.g., the intelligent server 200). On-device AI for processing an utterance without communication with the intelligent server 502 may be installed in the electronic device 501. The natural language platform 220 described with reference to FIGS. 2-4 and the like may be implemented in the electronic device 501.

According to an embodiment, the intelligent server 502 may perform speaker-adaptive speech recognition. The intelligent server 502 may enroll a speaker in a speech recognition service. The intelligent server 502 may store personalized data (e.g., voice) of the enrolled speaker. When a voice signal of the enrolled speaker is input while performing speaker verification, the intelligent server 502 may determine that the subject of the input voice signal is the enrolled speaker. The intelligent server 502 may perform speaker-adaptive speech recognition based on a sequence summarizing neural network (SSN) and an adapter layer. The SSN and the adapter layer may be trained based on the personalized data (e.g., voice) of the enrolled speaker. The intelligent server 502 may store an SSN and an adapter layer trained for each enrolled speaker. When the subject of a voice input is an enrolled speaker, the intelligent server 502 may perform speaker-adaptive speech recognition using a corresponding SSN and adapter layer.

Referring to FIG. 5, in an embodiment, the electronic device 501 may receive an utterance (e.g., "Call Gildon Hong"). The utterance (e.g., "Call Gildon Hong") may include words (e.g., Gildon Hong) requiring speaker adaptation. The words (e.g., Gildon Hong) included in the utterance may be easily mistaken for words (e.g., Gildong Hong) that are used more frequently by the public. The electronic device 501 may transmit a voice signal corresponding to the utterance to the intelligent server 502. The intelligent server 502 may perform speaker verification to determine whether the subject of the utterance is an enrolled speaker. When the subject of the utterance is an enrolled speaker, the intelligent server 502 may accurately recognize the utterance (e.g., "Call Gildon Hong") based on an SSN and an adapter layer corresponding to the enrolled speaker (e.g., an SSN and an adapter layer trained based on personalized data of the enrolled speaker). The intelligent server 502 may perform speaker-adaptive speech recognition, thereby guiding the electronic device 501 to provide the user with a correct response (e.g., a response saying "Calling Gildon Hong").

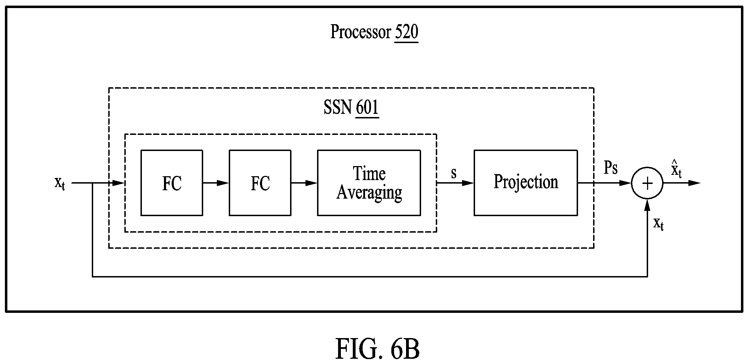

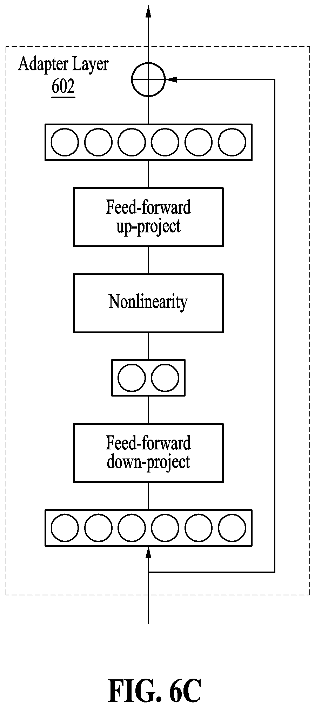

According to an embodiment, the intelligent server 502 may accurately perform speech recognition even when input data different from the training data of an ASR system (e.g., the natural language platform 220 or the ASR module 221) is input. The intelligent server 502 may perform speech recognition without modifying the ASR system (e.g., the ASR module 221), by selectively using an SSN and an adapter layer for speaker adaptation. When the subject of a voice input is an enrolled speaker, the intelligent server 502 may obtain an SSN adaptation feature based on an SSN corresponding to the enrolled speaker. The SSN is described in detail with reference to FIG. 6B. When the subject of the voice input is an enrolled speaker, the intelligent server 502 may selectively add an adapter layer corresponding to the enrolled speaker while not modifying an ASR model (e.g., a transformer-based ASR model, a conformer-based ASR model, or an RNN-transducer-based ASR model) of the ASR module 221. Common parameters of the ASR model (e.g., the transformer-based ASR model, the conformer-based ASR model, or the RNN-transducer-based ASR model) of the ASR module 221 may not be modified, and only adaptation parameters corresponding to the enrolled speaker may be selectively added. The adaptation parameters are described in detail with reference to FIG. 6C. The intelligent server 502 may perform speech recognition from the SSN adaptation feature based on the ASR model to which the adaptation parameters corresponding to the enrolled speaker are added.

In an embodiment, a portion or all of the operations performed by the electronic device 501 may be performed by the intelligent server 502. Hereinafter, a description is provided based on an assumption that the electronic device 501 performs the operations.

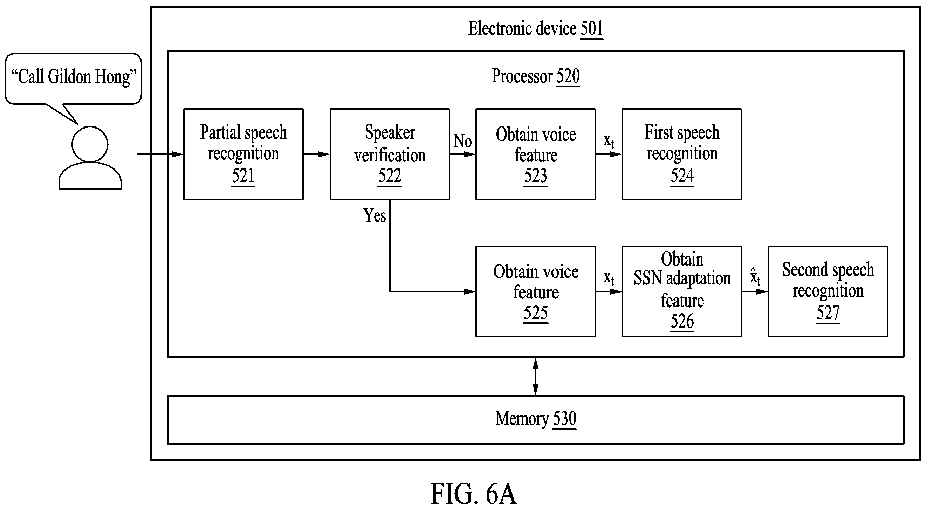

FIG. 6A is a schematic block diagram of an electronic device according to an embodiment, FIG. 6B is a schematic block diagram of an SSN according to an embodiment, and FIG. 6C is a schematic block diagram of an adapter layer according to an embodiment.

Referring to FIG. 6A, in an embodiment, an electronic device 501 may include at least some components of the electronic device 101 described with reference to FIG. 1 and the electronic device 201 described with reference to FIG. 2. As described above, on-device AI for processing an utterance without communication with an intelligent server (e.g., the intelligent server 200 or the intelligent server 502) may be installed in the electronic device 501. The natural language platform 220 described with reference to FIGS. 2-4 may be implemented in the electronic device 501. With respect to the electronic device 501, repeated descriptions provided with reference to FIGS. 1-4 are omitted. The electronic device 501 may include a processor 520 (e.g., the processor 120 or the processor 203) and a memory 530 (e.g., the memory 130 or the memory 207) electrically connected to the processor 520. The processor 520 (e.g., an application processor) may execute instructions by accessing the memory 530. The processor 520 may perform an operation for providing a response to a user. The memory 530 may store a variety of data used by at least one component (e.g., the processor 520) of the electronic device 501.

In an embodiment, operations 521-527 may be performed by the processor 520 of the electronic device 501. In the following examples, operations may be performed sequentially, but are not necessarily performed sequentially. For example, the operations may be performed in different orders, and at least two of the operations may be performed in parallel.

In operation 521, the processor 520 may perform partial speech recognition. Partial speech recognition may be performed for real-time speech recognition. For example, for a voice input of about 1200 milliseconds (ms), the processor 520 may sequentially output speech recognition results for an accumulated voice input (e.g., a voice input accumulated for about 400 ms).

In operation 522, the processor 520 may perform speaker verification. Speaker verification may be performed on the entire voice input (e.g., "Call Gildon Hong"). The processor 520 may determine whether the subject of the voice input (e.g., "Call Gildon Hong") is an enrolled speaker by performing speaker verification.

In operation 523, when the subject of the voice input (e.g., "Call Gildon Hong") is an unenrolled speaker, the processor 520 may obtain a voice feature $x_t$ for first ASR. The voice input may be divided into time windows of about 25 ms and transformed into log mel filterbanks. The time windows may overlap each other by about 10 ms.

The voice feature $x_t$ may be a set of log mel filterbanks into which the entire voice input is transformed. In addition, the voice feature $x_t$ may be a normalized feature (e.g., a feature normalized by cepstral mean and variance normalization (CMVN)).

In operation 524, the processor 520 may perform speech recognition from the voice feature $x_t$ based on a first ASR model. The first ASR model may be a transformer-based ASR model, a conformer-based ASR model, and/or an RNN-transducer-based ASR model. A transcription network of the RNN-transducer-based ASR model may include a transformer, conformer, or a long short-term memory (LSTM) encoder. The first ASR model may be an end-to-end model. The processor 520 may generate text data corresponding to the voice input (e.g., the voice signal corresponding to the utterance) from the voice feature $x_t$ based on the first ASR model.

In operation 525, when the subject of the voice input (e.g., "Call Gildon Hong") is an enrolled speaker, the processor 520 may obtain a voice feature $x_t$ for second ASR. The voice feature $x_t$ obtained in operation 523 and the voice feature $x_t$ obtained in operation 525 may be substantially the same type of data.

In operation 526, the processor 520 may obtain an SSN adaptation feature $\hat{x}_t$. The SSN adaptation feature $\hat{x}_t$ may be obtained from an SSN (e.g., an SSN 601) trained based on data (e.g., the voice) of the enrolled speaker. Referring to FIG. 6B, a schematic block diagram of the SSN 601 is shown. The SSN 601 may be a simple neural network designed to replace i-vector. The SSN 601 may receive the voice feature $x_t$ and accumulate values passing through feed-forward layers (e.g., fully connected (FC) layers). The SSN 601 may calculate the average of the accumulated values to obtain an auxiliary feature $S$. The SSN 601 may project the auxiliary feature $S$ into the dimension of the voice feature $x_t$. The SSN 601 may output the SSN adaptation feature $\hat{x}_t$ by adding the projected feature $Ps$ and the voice feature $x_t$. The operation of obtaining the SSN adaptation feature $\hat{x}_t$ may be expressed through Equation 1.

[Equation 1]

$$s = \frac{1}{T}\sum_{t=1}^{T} g(x_t)$$

$$\hat{x}_t = x_t + Ps$$

Equation 1 shown above is an example for better understanding, is not limited thereto, and may be modified, applied, or expand in various ways.

In Equation 1, $g(\cdot)$ may denote an FC layer. $g(\cdot)$

may be replaced with an adapter layer to reduce the number of parameters. The auxiliary feature $S$ may represent the context of the voice input. The auxiliary feature $S$ may include information about the speaker. The processor 520 may perform speaker-adaptive speech recognition by selectively using the SSN (e.g., the SSN 601) corresponding to the enrolled speaker.

In operation 527, the processor 520 may perform speech recognition from the SSN adaptation feature $\hat{x}_t$ based on a second ASR model. The second ASR model may be configured by selectively adding an adapter layer 602 configured for the personalization of the enrolled speaker to the first ASR model (e.g., the transformer-based ASR model, the conformer-based ASR model, or the RNN-transducer-based ASR model). Referring to FIG. 6C, the adapter layer 602 may have a bottleneck structure to limit the number of parameters. The adapter layer 602 may project a d-dimensional feature into an m-dimension which is a lower dimension. The adapter layer 602 may apply nonlinearity to the m-dimensional feature and then project the m-dimensional feature to which nonlinearity is applied back into the d-dimension. The total number of parameters added for each adapter layer (e.g., the adapter layer 602) may be 2md + d + m. The adapter layer may be added to an encoder (e.g., an encoder of a transformer, an encoder of a conformer, or an LSTM encoder). For example, the adapter layer may be added between a feed-forward layer and a nonlinearity layer (e.g., ReLU) of the encoder of the transformer. When the subject of the voice input is an enrolled speaker, the processor 520 may perform speaker-adaptive speech recognition by selectively adding an adapter layer corresponding to the enrolled speaker.

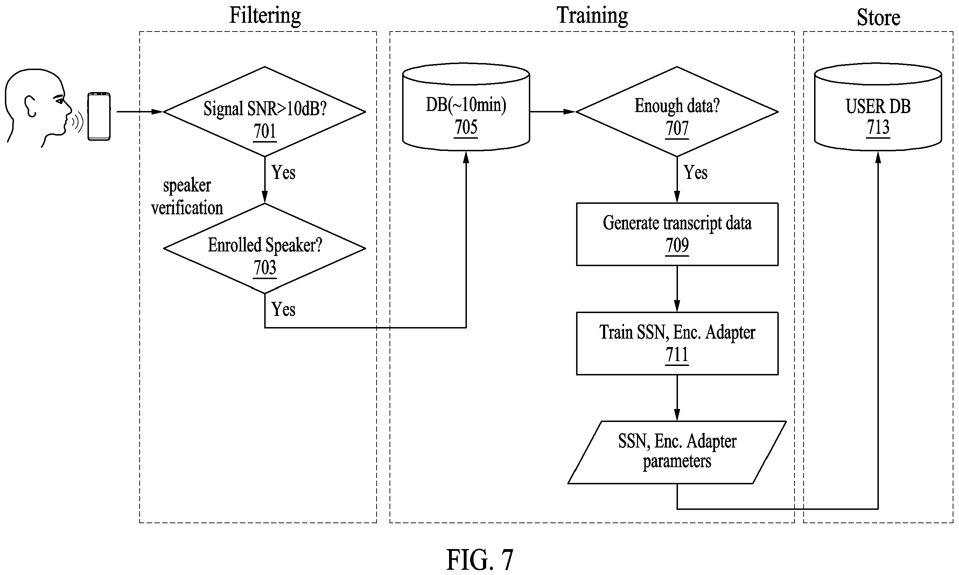

FIG. 7 is a diagram illustrating a method of training an SSN and an adapter layer according to an embodiment.

According to an embodiment, operations 701-713 may be construed as being performed by the intelligent server 502 (e.g., the intelligent server 200 or the intelligent server 502) or the processor 520 (e.g., the processor 120 or the processor 203) of the electronic device 501 (e.g., the electronic device 101 or the electronic device 201). In the following examples, operations may be performed sequentially, but are not necessarily performed sequentially. For example, the operations may be performed in different orders, and at least two of the operations may be performed in parallel.

In operations 701 and 703, the intelligent server 502 may collect a voice signal. In operation 701, the voice signal may be a voice signal having a signal-to-noise ratio (SNR) greater than about 10 decibels (dB). In operation 703, the voice signal may be a voice signal of a speaker enrolled through speaker verification. The processor 520 may collect the voice signal when a user agreeing to voice collection makes a phone call. When the user initializes the electronic device 501, the processor 520 may collect a voice signal of the user reading a previously prepared script.

In operations 705 through 707, the intelligent server 502 may collect the voice signal until a sufficient amount (e.g., about 10 minutes) of the voice signal is collected.

In operation 709, the intelligent server 502 may generate transcript data based on the collected voice signal.

In operation 711, the intelligent server 502 may train an SSN and an adapter layer based on the transcript data. The trained SSN may have a size of about 0.75 MiB (e.g., single precision, FC1{80 x 512}, FC2{512 x 256}, Projection{256 x 80}). When the SSN is changed to an adapter structure, the size of the SSN may be reduced to about 144 KiB (e.g., an adapter having a structure of single precision, projection1{80 x 128}, FC1{128 x 64}, FC2 {64 x 128}, projection2{128 x 80}). The total size of trained adapter layers excluding the SSN may be about 1728 KiB (e.g., about 144 KiB per adapter layer, wherein "2" adapter layers are added for each self-attention layer, and a total of "6" self-attention layers are included in the encoder of the transformer). The intelligent server 502 may obtain the trained SSN and the trained adapter layer (or trained adaptation parameters).

In operation 713, the intelligent server 502 may store the trained SSN and the trained adapter layer, corresponding to each enrolled speaker, in a user database (DB).

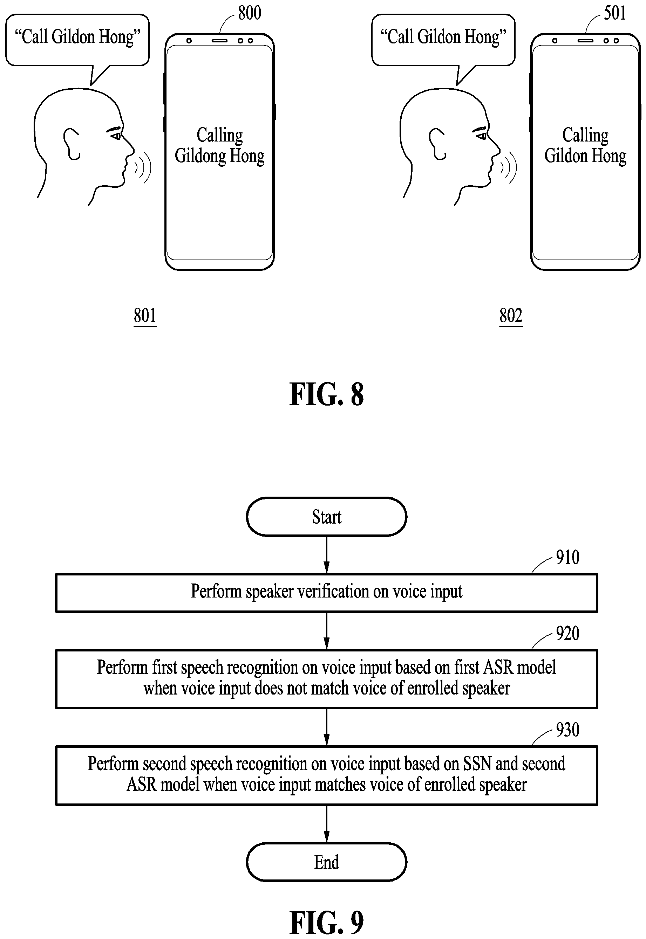

FIG. 8 is a diagram illustrating a result of speech recognition by an electronic device according to an embodiment.

Referring to FIG. 8, in case 801, an electronic device 800 may receive an utterance (e.g., "Call Gildon Hong") including words (e.g., Gildon Hong) requiring speaker adaptation. The electronic device 800 may be a device without speaker adaptation. The electronic device 800 may misunderstand the words (e.g., Gildon Hong) included in the utterance as words (e.g., Gildong Hong) that are used more frequently by the public and provide a user with an inappropriate response (e.g., Calling Gildong Hong).

In case 802, the electronic device 501 (e.g., the electronic device 101 or the electronic device 201) may receive an utterance (e.g., "Call Gildon Hong"). The utterance (e.g., "Call Gildon Hong") may include words (e.g., Gildon Hong) requiring speaker adaptation. The words (e.g., Gildon Hong) included in the utterance may be easily mistaken for words (e.g., Gildong Hong) that are used more frequently by the public. The electronic device 501 may perform speaker verification to determine whether the subject of the utterance is an enrolled speaker. When the subject of the utterance is an enrolled speaker, the electronic device 501 may accurately recognize the utterance (e.g., "Call Gildon Hong") based on an SSN and an adapter layer corresponding to the enrolled speaker (e.g., an SSN and an adapter layer trained based on personalized data of the enrolled speaker). The electronic device 501 may provide a user with a correct response (e.g., Calling Gildon Hong) by performing speaker-adaptive speech recognition.

FIG. 9 is a flowchart illustrating an operating method of an intelligent server according to an embodiment.

The operations 910-930 may be performed sequentially, but not necessarily performed sequentially. For example, operations 910 through 930 may be performed in different orders, and at least two operations thereof may be performed in parallel.

In operation 910, an intelligent server (e.g., the intelligent server 200 or the intelligent server 502) may perform speaker verification on a voice input.

In operation 920, the intelligent server 502 may perform first speech recognition on the voice input based on a first ASR model when the voice input does not match the voice of an enrolled speaker.

In operation 930, the intelligent server 502 may perform second speech recognition on the voice input based on an SSN and a second ASR model when the voice input matches the voice of the enrolled speaker.

An electronic device (e.g., the electronic device 101, the electronic device 201, or the electronic device 501 of FIGS. 5 and 6) according to an embodiment may include a memory (e.g., the memory 130, the memory 207 of FIG. 2, or the memory 530) including instructions, and a processor (e.g., the processor 120, the processor 203, or the processor 520) electrically connected to the memory and configured to execute the instructions. When the instructions are executed by the processor, the processor may perform speaker verification on a voice input. The processor may perform first speech recognition on the voice input based on a first ASR model when the voice input does not match the voice of an enrolled speaker. The processor may perform second speech recognition on the voice input based on an SSN and a second ASR model when the voice input matches the voice of the enrolled speaker.

According to an embodiment, the second ASR model may be configured by selectively adding an adapter layer configured for the personalization of the enrolled speaker to the first ASR model.

According to an embodiment, the processor may obtain a voice feature based on the voice input. The processor may perform the first speech recognition from the voice feature based on the first ASR model.

According to an embodiment, the processor may obtain a voice feature based on the voice input. The processor may obtain an SSN adaptation feature from the voice feature based on the SSN. The processor may perform the second speech recognition from the SSN adaptation feature based on the second ASR model.

According to an embodiment, the first ASR model may include any one of a transformer-based ASR model, a conformer-based ASR model, or an RNN-transducer-based ASR model.

According to an embodiment, the processor may perform partial speech recognition on the voice input that is sequentially input, based on the first ASR model. The processor may perform the speaker verification when the voice input is entirely input.

According to an embodiment, the SSN and the adapter layer may be trained based on transcript data obtained by decoding a user voice that passes speaker verification.

An intelligent server (e.g., the intelligent server 200 or the intelligent server 502) according to an embodiment may include a memory including instructions and a processor electrically connected to the memory and configured to execute the instructions. When the instructions are executed by the processor, the processor may perform speaker verification on a voice input. The processor may perform first speech recognition on the voice input based on a first ASR model when the voice input does not match the voice of an enrolled speaker. The processor may perform second speech recognition on the voice input based on an SSN and a second ASR model when the voice input matches the voice of the enrolled speaker.

According to an embodiment, the second ASR model may be configured by selectively adding an adapter layer configured for the personalization of the enrolled speaker to the first ASR model.

According to an embodiment, the processor may obtain a voice feature based on the voice input. The processor may perform the first speech recognition from the voice feature based on the first ASR model.

According to an embodiment, the processor may obtain a voice feature based on the voice input. The processor may obtain an SSN adaptation feature from the voice feature based on the SSN. The processor may perform the second speech recognition from the SSN adaptation feature based on the second ASR model.

According to an embodiment, the first ASR model may include any one of a transformer-based ASR model, a conformer-based ASR model, or an RNN-transducer-based ASR model.

According to an embodiment, the processor may perform partial speech recognition on the voice input that is sequentially input, based on the first ASR model. The processor may perform the speaker verification when the voice input is entirely input.

According to an embodiment, the SSN and the adapter layer may be trained based on transcript data obtained by decoding a user voice that passes speaker verification.

An operating method of an intelligent server (e.g., the intelligent server 200 or the intelligent server 502) according to an embodiment may include performing speaker verification on a voice input. The operating method of the intelligent server may include performing first speech recognition on the voice input based on a first ASR model when the voice input does not match the voice of an enrolled speaker. The operating method of the intelligent server may include performing second speech recognition on the voice input based on an SSN and a second ASR model when the voice input matches the voice of the enrolled speaker.

According to an embodiment, the second ASR model may be configured by selectively adding an adapter layer configured for the personalization of the enrolled speaker to the first ASR model.

According to an embodiment, the performing of the first speech recognition may include obtaining a voice feature based on the voice input. The performing of the first speech recognition may include performing the first speech recognition from the voice feature based on the first ASR model.

According to an embodiment, the performing of the second speech recognition may include obtaining a voice feature based on the voice input. The performing of the second speech recognition may include obtaining an SSN adaptation feature from the voice feature based on the SSN. The performing of the second speech recognition may include performing the second speech recognition from the SSN adaptation feature based on the second ASR model.

According to an embodiment, the first ASR model may include any one of a transformer-based ASR model, a conformer-based ASR model, or an RNN-transducer-based ASR model.

According to an embodiment, the SSN and the adapter layer may be trained based on transcript data obtained by decoding a user voice that passes speaker verification.

The electronic device according to an embodiment may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be understood that an embodiment of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wired), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 1740) including one or more instructions that are stored in a storage medium (e.g., an internal memory 1736 or an external memory 1738) that is readable by the machine (e.g., the electronic device 1701). For example, a processor (e.g., the processor 1720) of the machine (e.g., the electronic device 1701) may invoke at least one of the one or more instructions stored in the storage medium and may execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least portion of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

While example embodiments of the disclosure have been shown and described, the disclosure is not limited to the aforementioned specific embodiments, and it is apparent that various modifications can be made by those having ordinary skill in the technical field to which the disclosure belongs, without departing from the gist of the disclosure as claimed by the appended claims and their equivalents. Also, it is intended that such modifications are not to be interpreted independently from the technical idea or prospect of the disclosure.

## Claims

1. An electronic device 101, 201, or 501 comprising:

   a memory 130, 207, or 530 storing at least one instruction; and
   at least one processor 120, 203, or 520 operatively connected to the memory 130, 207, or 530 and configured to execute the at least one instruction to:

   perform speaker verification on a voice input to determine whether the voice input matches a voice of an enrolled speaker,
   based on determining that the voice input does not match the voice of the enrolled speaker, perform first speech recognition on the voice input based on a first automatic speech recognition (ASR) model, and
   based on determining that the voice input matches the voice of the enrolled speaker, perform second speech recognition on the voice input based on a sequence summarizing neural network (SSN) 601 and a second ASR model.

2. The electronic device 101, 201, or 501 of claim 1, wherein the second ASR model is configured by selectively adding an adapter layer 602 configured for personalization of the enrolled speaker to the first ASR model.

3. The electronic device 101, 201, or 501 of any of claim 1 and 2, wherein the at least one processor 120, 203, or 520 is further configured to execute the at least one instruction to:

obtain a voice feature based on the voice input, and
perform the first speech recognition from the voice feature based on the first ASR model.

4. The electronic device 101, 201, or 501 of any of claim 1 to 3, wherein the at least one processor 120, 203, or 520 is further configured to execute the at least one instruction to:

obtain a voice feature based on the voice input, obtain an SSN adaptation feature from the voice feature based on the SSN 601, and
perform the second speech recognition from the SSN adaptation feature based on the second ASR model.

5. The electronic device 101, 201, or 501 of any of claim 1 to 4, wherein the first ASR model comprises one of a transformer-based ASR model, a conformer-based ASR model, or a recurrent neural network (RNN)-transducer-based ASR model.

6. The electronic device 101, 201, or 501 of any of claim 1 to 5, wherein the at least one processor 120, 203, or 520 is further configured to execute the at least one instruction to:

perform partial speech recognition on the voice input that is sequentially input, based on the first ASR model, and
based on the voice input being entirely input, perform the speaker verification.

7. The electronic device 101, 201, or 501 of any of claim 1 to 6, wherein the SSN 601 and the adapter layer 602 are trained based on transcript data obtained by decoding a user voice that passes speaker verification.

8. An intelligent server 200 or 502 comprising:

a memory storing at least one instruction; and
at least one processor operatively connected to the memory and configured to execute the at least one instruction to:

perform speaker verification on a voice input to determine whether the voice input matches a voice of an enrolled speaker, based on determining that the voice input does not match the voice of the enrolled speaker, perform first speech recognition on the voice input based on a first automatic speech recognition (ASR) model, and based on determining that the voice input matches the voice of the enrolled speaker, perform second speech recognition on the voice input based on a sequence summarizing neural network (SSN) 601 and a second ASR model.

9. The intelligent server 200 or 502 of claim 8, wherein the second ASR model is configured by selectively adding an adapter layer 602 configured for personalization of the enrolled speaker to the first ASR model.

10. The intelligent server 200 or 502 of any of claim 8 and 9, wherein the at least one processor is further configured to execute the at least one instruction to:

obtain a voice feature based on the voice input, and
perform the first speech recognition from the voice feature based on the first ASR model.

11. The intelligent server 200 or 502 of any of claim 8 to 10, wherein the at least one processor is further configured to execute the at least one instruction to:

obtain a voice feature based on the voice input, obtain an SSN adaptation feature from the voice feature based on the SSN 601, and
perform the second speech recognition from the SSN adaptation feature based on the second ASR model.

12. The intelligent server 200 or 502 of any of claim 8 to 11, wherein the first ASR model comprises one of a transformer-based ASR model, a conformer-based ASR model, or a recurrent neural network (RNN)-transducer-based ASR model.

13. The intelligent server 200 or 502 of any of claim 8 to 12, wherein the at least one processor is further configured to execute the at least one instruction to:

perform partial speech recognition on the voice input that is sequentially input, based on the first ASR model, and
based on the voice input being entirely input, perform the speaker verification.

14. The intelligent server 200 or 502 of any of claim 8 to 13, wherein the SSN 601 and the 602 adapter layer are trained based on transcript data obtained by decoding a user voice that passes speaker verification.

**15.** An operating method of an intelligent server 200 or 502, the operating method comprising:

performing speaker verification on a voice input to determine whether the voice input matches a voice of an enrolled speaker;

based on determining that the voice input does not match the voice of the enrolled speaker, performing first speech recognition on the voice input based on a first automatic speech recognition (ASR) model; and

based on determining that the voice input matches the voice of the enrolled speaker, performing second speech recognition on the voice input based on a sequence summarizing neural network (SSN) 601 and a second ASR model.

FIG. 1

EP 4 546 335 A1

FIG. 2

Service server 300
- CP service A 301
- CP service B 302
- CP service C
...

Intelligent server 200

Front end 210

Natural language platform 220
- ASR module 221
- NLU module 223
- Planner module 225
- NLG module 227
- TTS module 229

Capsule DB 230
- Capsule
- Capsule

Execution engine 240
End user interface 250
Management platform 260
Big data platform 270
Analytic platform 280

Electronic device 201
- Communication interface 202
- Processor 203
- Display module 204
- Speaker 205
- Microphone 206

Memory 207
- First app 211A
- Second app 211B
- ...
- N-th app 211C
- 211

SDK 208

Client module 209

20

EP 4 546 335 A1

**FIG. 3**

201

201

NOV

|    |    |    |    | 1  | 2  | 3  |
|----|----|----|----|----|----|----|
| 4  | 5  | 6  | 7  | 8  | 9  | 10 |
| 11 | 12 | 13 | 14 | 15 | 16 | 17 |
| 18 | 19 | 20 | 21 | 22 | 23 | 24 |
| 25 | 26 | 27 | 28 |    |    |    |

311

313

Tell me this week's schedule!

310

NOV

| 5 | 6 | 7 | ⑧ | 9 | 10 | 11 |
|---|---|---|---|---|----|----|

+

320

**FIG. 4**

FIG. 5

**Electronic device 501**

**Processor 520**

"Call Gildon Hong"

Partial speech recognition **521** → Speaker verification **522** —No→ Obtain voice feature **523** —$x_t$→ First speech recognition **524**

Yes ↓

Obtain voice feature **525** —$x_t$→ Obtain SSN adaptation feature **526** —$\hat{x}_t$→ Second speech recognition **527**

↕

Memory **530**

FIG. 6A

FIG. 6B

**Adapter Layer**
**602**

Feed-forward
up-project

Nonlinearity

Feed-forward
down-project

# FIG. 6C

FIG. 7

"Call Gildon Hong"

Calling
Gildong Hong

801

"Call Gildon Hong"

Calling
Gildon Hong

802

**FIG. 8**

Start

Perform speaker verification on voice input — 910

Perform first speech recognition on voice input based on first ASR model
when voice input does not match voice of enrolled speaker — 920

Perform second speech recognition on voice input based on SSN and second
ASR model when voice input matches voice of enrolled speaker — 930

End

**FIG. 9**

## INTERNATIONAL SEARCH REPORT

| International application No. |
|---|
| **PCT/KR2023/011151** |

**A. CLASSIFICATION OF SUBJECT MATTER**

**G10L 15/22**(2006.01)i; **G10L 17/04**(2013.01)i; **G10L 17/06**(2013.01)i; **G10L 15/30**(2013.01)i; **G10L 15/26**(2006.01)i; **G06N 3/02**(2006.01)i

According to International Patent Classification (IPC) or to both national classification and IPC

**B. FIELDS SEARCHED**

Minimum documentation searched (classification system followed by classification symbols)

G10L 15/22(2006.01); G06Q 30/02(2012.01); G10L 15/16(2006.01); G10L 17/04(2013.01); G10L 17/14(2013.01); G10L 25/93(2013.01); H04M 3/493(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음성(voice), 매칭(matching), 화자(speaker), 검증(verification), 자동 음성 인식 (Automatic Speech Recognition, ASR), 모델(Model), Sequence Summarizing Neural Network(SSN)

**C. DOCUMENTS CONSIDERED TO BE RELEVANT**

| Category* | Citation of document, with indication, where appropriate, of the relevant passages | Relevant to claim No. |
|---|---|---|
| A | KR 10-1209033 B1 (YESPEECH CO., LTD.) 06 December 2012 (2012-12-06)<br>See claims 1, 4, 6-8, 10, 12-13 and 17-18. | 1-15 |
| A | JP 2021-039216 A (NIPPON TELEGR & TELEPH CORP. <NTT> et al.) 11 March 2021 (2021-03-11)<br>See claims 1-8. | 1-15 |
| A | KR 10-2020-0109841 A (POSICUBE CO., LTD.) 23 September 2020 (2020-09-23)<br>See claims 1-8. | 1-15 |
| A | KR 10-2020-0120765 A (GOOGLE LLC) 21 October 2020 (2020-10-21)<br>See claims 1-20. | 1-15 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 October 2023** | **26 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011151** |

**C.    DOCUMENTS CONSIDERED TO BE RELEVANT**

| Category* | Citation of document, with indication, where appropriate, of the relevant passages | Relevant to claim No. |
| --- | --- | --- |
| A | VESELY, Karel et al. Sequence summarizing neural network for speaker adaptation. 2016 IEEE International Conference on Acoustics, Speech and Signal Processing (ICASSP). pp. 5315-5319, 25 March 2016. <br> [Retrieved on 16 October 2023]. Retrieved from <URL: https://ieeexplore.ieee.org/ document/7472692>. <br> See pages 5315-5318. | 1-15 |

Form PCT/ISA/210 (second sheet) (July 2022)

## INTERNATIONAL SEARCH REPORT
### Information on patent family members

| International application No. |
| --- |
| **PCT/KR2023/011151** |

| Patent document cited in search report | | | Publication date (day/month/year) | Patent family member(s) | | | Publication date (day/month/year) |
| --- | --- | --- | --- | --- | --- | --- | --- |
| KR | 10-1209033 | B1 | 06 December 2012 | None | | | |
| JP | 2021-039216 | A | 11 March 2021 | None | | | |
| KR | 10-2020-0109841 | A | 23 September 2020 | None | | | |
| KR | 10-2020-0120765 | A | 21 October 2020 | EP | 3090428 | A1 | 09 November 2016 |
| | | | | EP | 3090428 | B1 | 06 June 2018 |
| | | | | EP | 3154056 | A1 | 12 April 2017 |
| | | | | EP | 3154056 | B1 | 03 October 2018 |
| | | | | EP | 3392880 | A1 | 24 October 2018 |
| | | | | EP | 3392880 | B1 | 25 January 2023 |
| | | | | EP | 3401906 | A1 | 14 November 2018 |
| | | | | EP | 3401906 | B1 | 01 January 2020 |
| | | | | EP | 3664082 | A1 | 10 June 2020 |
| | | | | JP | 2017-049600 | A | 09 March 2017 |
| | | | | JP | 2017-058689 | A | 23 March 2017 |
| | | | | JP | 2017-516122 | A | 15 June 2017 |
| | | | | JP | 2018-036675 | A | 08 March 2018 |
| | | | | KR | 10-1763089 | B1 | 04 August 2017 |
| | | | | KR | 10-1874274 | B1 | 03 July 2018 |
| | | | | KR | 10-2167657 | B1 | 19 October 2020 |
| | | | | KR | 10-2491993 | B1 | 26 January 2023 |
| | | | | US | 10037760 | B2 | 31 July 2018 |
| | | | | US | 10504524 | B2 | 10 December 2019 |
| | | | | US | 11056120 | B2 | 06 July 2021 |
| | | | | US | 11568879 | B2 | 31 January 2023 |
| | | | | US | 2015-0279374 | A1 | 01 October 2015 |
| | | | | US | 2016-0307574 | A1 | 20 October 2016 |
| | | | | US | 2018-0025734 | A1 | 25 January 2018 |
| | | | | US | 2018-0308492 | A1 | 25 October 2018 |
| | | | | US | 2020-0075029 | A1 | 05 March 2020 |
| | | | | US | 2021-0295850 | A1 | 23 September 2021 |
| | | | | US | 8812320 | B1 | 19 August 2014 |
| | | | | US | 9424846 | B2 | 23 August 2016 |
| | | | | US | 9741348 | B2 | 22 August 2017 |
| | | | | WO | 2015-153351 | A1 | 08 October 2015 |

Form PCT/ISA/210 (patent family annex) (July 2022)